Europäisches Patentamt

European Patent Office

Office européen des brevets

(19)

(11) Veröffentlichungsnummer: **0 004 588**
**B1**

## (12) EUROPÄISCHE PATENTSCHRIFT

(45) Veröffentlichungstag der Patentschrift:
**25.02.81**

(21) Anmeldenummer: **79100813.9**

(22) Anmeldetag: **16.03.79**

(51) Int. Cl.³: **A 62 C 37/06,** F 16 K 31/10

(54) Auslösevorrichtung für ein Ventil einer Brandlöschanlage.

(30) Priorität: **10.04.78 CH 3814/78**

(43) Veröffentlichungstag der Anmeldung:
**17.10.79 Patentblatt 79/21**

(45) Bekanntmachung des Hinweises auf die Patenterteilung:
**25.02.81 Patentblatt 81/8**

(84) Benannte Vertragsstaaten:
**BE FR GB IT NL SE**

(56) Entgegenhaltungen
**DE-A-1 750 372**
**DE-U-1 780 878**
**GB-A-817 272**
**US-A-2 780 433**
**US-A-2 943 496**

(73) Patentinhaber: **CERBERUS AG, Alte Landstrasse 411,
CH-8708 Männedorf (CH)**

(72) Erfinder: **Trunner, Josef, Brunnenweg 634,
CH-8617 Mönchaltorf (CH)**
Erfinder: **Both, Marinus, Alte Landstrasse 388,
CH-8708 Männedorf (CH)**

(74) Vertreter: **Tiemann, Ulrich, Dr. et al, c/o Cerberus AG
Patentbüro Alte Landstrasse 411, CH-8708 Männedorf
(CH)**

## Auslösevorrichtung für ein Ventil einer Brandlöschanlage

Die Erfindung betrifft eine Auslösevorrichtung für ein Ventil einer Brandlöschanlage mit einem linear beweglichen Element, das bei Entriegelung einer vorgespannten Feder aus seiner Ruhelage bewegt wird und das Ventil betätigt, sowie mit zwei Kugeldruckplatten und zwischen den Kugeldruckplatten angeordneten Kugeln, die die Kugeldruckplatten auf Distanz und die Feder gespannt halten und bei Verdrehung der Kugeldruckplatten gegeneinander in Vertiefungen der Kugeldruckplatten einrasten und damit die Feder mindestens teilweise zu entspannen vermögen.

Sowohl bei Brandlöschanlagen mit einzelnen, nahe dem zu schützenden Objekt angeordneten Löschmittelbehältern, als auch bei solchen mit zentral angeordneter Löschmittelbehälterbatterie, werden die einzelnen Behälter durch Ventile geschlossen gehalten, um ein Entweichen des Löschmittels, z. B. $CO_2$, Halon, Trockenlöschpulver, Schaum oder Wasser, in das Rohrsystem zu verhindern. Im Brandfall werden die Ventile manuell oder durch eine automatische Brandmeldeanlage gesteuert geöffnet, und die Löschmittelzufuhr wird durch ein Rohrsystem zu den Austrittsdüsen am Brandort freigegeben.

Es ist bekannt, zur Öffnung der Ventile Ansteuereinheiten zu verwenden, die ein linear bewegliches Element enthalten, z. B. einen Stößel oder einen Stift, welches bei der Auslösung auf ein entsprechendes Teil des Ventiles drückt und dadurch die Ventilöffnung bewirkt. Die Ansteuerung kann beispielsweise mechanisch, pneumatisch oder elektrisch erfolgen.

Es ist bereits bekannt, zur Bewegung des Stößels eine vorgespannte Feder zu verwenden, die bei der Auslösung, beispielsweise auf elektromagnetische Weise, entriegelt wird. Die in der Feder gespeicherte Energie wird dabei freigesetzt und auf den Stößel übertragen. Nachteilig ist dabei, daß die Ansteuerung oft nur auf eine Art möglich ist. Um weitere Ansteuerungsarten zu ermöglichen, sind aufwendige und komplizierte Hilfssysteme notwendig, oft mit eigenen Energiespeichern, die ihrerseits störanfällig sind und deswegen zusätzlich überwacht werden müssen.

Ein weiterer Nachteil vorbekannter Ansteuerungen ist, daß eine Überprüfbarkeit der Funktion nicht oder nur in sehr geringem Maße möglich ist. Auch fehlen bei vielen Ansteuerungen die erforderlichen Betriebszustands-Überwachungsorgane, die für einen einwandfreien Funktionsablauf in Brandlöschanlagen notwendig sind, beispielsweise Stellungsschalter, welche die Auslösung des Ventils an eine Signalzentrale melden.

Aus dem DE-GM 1 780 878 ist eine Ventilbetätigungsvorrichtung bekannt, bei der die zur Betätigung eines Ventils erforderliche geradlinige Bewegung dadurch zustande kommt, daß zwei Kugeldruckplatten, die durch Kugeln in einem bestimmten Abstand gehalten werden, gegeneinander verdreht werden, wodurch die Kugeln in Vertiefungen der Kugeldruckplatten einrasten, der Abstand zwischen den Platten verringert wird und damit Betätigung des Ventils erfolgt.

In der US-PS 2 943 496 ist eine ähnliche Vorrichtung zur Übertragung einer Drehbewegung in eine geradlinige Bewegung beschrieben.

Diese bekannten Vorrichtungen weisen jedoch den Nachteil auf, daß die zur Betätigung des Ventils erforderliche Kraft zwar verringert wird, aber dennoch unmittelbar bei Betätigung des Ventils aufgebracht werden muß. Diese Kraft wird bei den bekannten Auslösevorrichtungen durch einen Betätigungsknopf bzw. -hebel auf die Auslösevorrichtung übertragen. Die vorhandenen elastischen Elemente dienen — sofern sie nicht Bestandteil des Ventilmechanismus sind — lediglich dazu, linear bewegliche Auslöseelemente in Ruhestellung zu halten. Für Brandlöscheinrichtungen ist der erforderliche Kraftaufwand jedoch nicht genügend vermindert, da — insbesondere bei automatischer Auslösung — die Betätigung des Ventils mit absoluter Sicherheit erfolgen muß.

Aufgabe der Erfindung ist es, die erwähnten Nachteile vorbekannter Auslöseeinrichtungen für Brandlöschmittelventile zu vermeiden und insbesondere eine Auslösevorrichtung zu schaffen, welche ohne aufwendige und komplizierte Hilfssysteme auf mehrere Arten auslösbar ist, z. B. mechanisch bzw. manuell und durch elektrische Ansteuerung. Dabei soll der Energieaufwand zur Auslösung klein sein, und die Einrichtung soll auf einfache Weise auf ihre Funktionsfähigkeit überprüfbar und der Betriebszustand überwachbar sein.

Die Erfindung ist durch die Merkmale der Patentansprüche gekennzeichnet und wird anhand von in den Figuren dargestellten Ausführungsbeispielen der Erfindung näher erläutert.

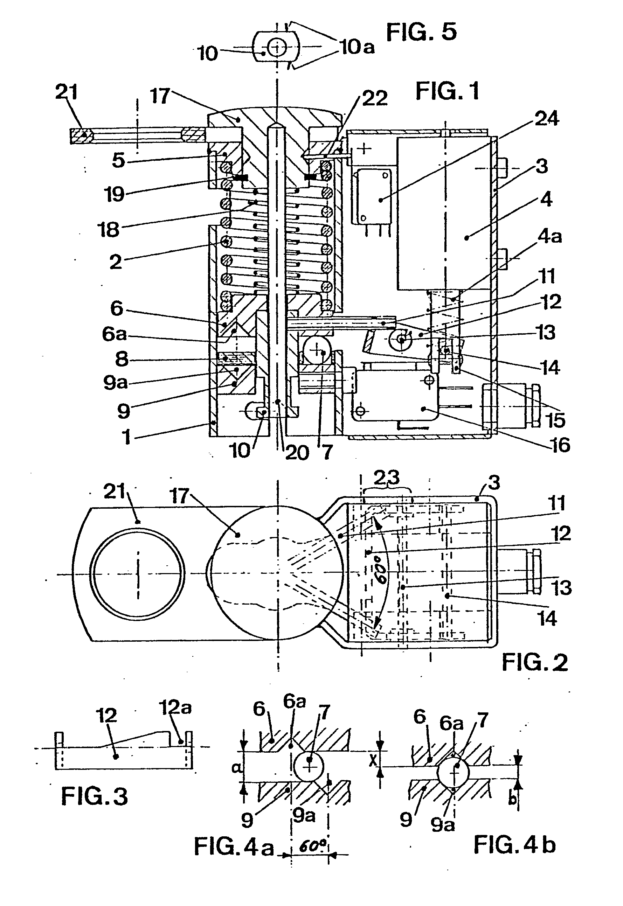

Fig. 1 zeigt eine Auslösevorrichtung im Schnitt.

Fig. 2 zeigt diese Vorrichtung in Aufsicht.

Fig. 3 zeigt die Auslöseklinke der Vorrichtung.

Fig. 4a und 4b zeigen schematisch die Kugeldruckplatten der Auslösevorrichtung im gespannten und im entspannten Zustand.

Fig. 5 zeigt die Auslösesicherung der Einrichtung.

Fig. 6 zeigt eine Ausführungsform des Handauslöseknopfs.

Bei der in den Figuren dargestellten, erfindungsgemäßen Auslösevorrichtung ist ein aus einem Rohrstück bestehendes Gehäuse 1 vorgesehen, welches eine Schraubenfeder 2 und einen Stößel 10, sowie die sekundäre Verriegelung aufnimmt. Seitlich am Gehäuse 1 ist ein Hilfsgehäuse 3 angebracht. Dieses enthält einen Elektromagneten 4 mit der primären Verriegelung sowie Mikroschalter 16 und 24 für die Betriebszustandsüberwachung.

Das rohrförmige Gehäuse 1 wird auf der Oberseite durch einen Führungsflansch 5 abgeschlossen. Die andere Seite wird durch eine fest mit dem Gehäuse 1 verbundene untere Kugeldruckplatte 9 begrenzt. Die Fortsetzung des Gehäuses 1 nach unten dient zur Befestigung der Auslöseeinheit, z. B. auf einer pneumatischen Ansteuereinheit oder direkt auf dem zu betätigenden Flaschenventil.

Konzentrisch im Gehäuse 1 ist die Schraubenfeder 2 montiert, die sich oben auf den Führungsflansch 5 und unten auf eine bewegliche (in Richtung der Achse und um die Achse drehbar) obere Kugeldruckplatte 6 abstützt, in welche der Auslösestößel 10 eingesetzt ist. Die Kugeldruckplatte 6 ruht auf drei Stahlkugeln 7, die durch einen Käfig 8 radial auf dem Teilkreis und gegenüber einander auf einer Teilung von 120° positioniert gehalten werden. Die Stahlkugeln 7 ihrerseits ruhen auf der fest mit dem Gehäuse 1 verbundenen unteren Kugeldruckplatte 9. Sowohl die obere bewegliche Kugeldruckplatte 6 wie auch die untere feste Kugeldruckplatte 9 weisen je 3 identische Vertiefungen auf und zwar in der gleichen Teilung und auf dem gleichen Teilkreis wie die des Käfigs 8. Wenn die Stahlkugeln 7 die beiden Kugeldruckplatten 6 und 9 im flachen parallelen Teil berühren, so ist die Distanz zwischen den beiden Kugeldruckplatten gleich dem Durchmesser a der Stahlkugeln 7. In diesem Zustand sind die Vertiefungen in den Kugeldruckplatten 6 und 9 nicht einander gegenüberliegend sondern um 60°, bezogen auf den Teilkreis, verschoben. In diesem Zustand ist die Auslöseeinheit gespannt.

Bei einer Drehung der oberen Kugeldruckplatte 6 um 60° gegenüber dem Gehäuse 1 bzw. gegenüber der unteren Kugeldruckplatte 9 kommen die jeweiligen Vertiefungen 6a und 9a einander gegenüber zu liegen. Die Stahlkugeln 7 rollen dabei über die Kontaktflächen mit den Kugeldruckplatten ab, bis sie in die Vertiefungen 6a und 9a zu liegen kommen. Dadurch verringert sich die Distanz a zwischen den Kugeldruckplatten 6 und 9 auf eine geringere Distanz b. In diesem Zustand ist die Auslöseeinheit entspannt, wobei der Hub x der Distanzänderung der beiden Kugeldruckplatten entspricht. Der mit einem überlangen Spannstift 11, der gemäß einer Ausführungsform ein üblicher Schwerspannstift ist, an der oberen beweglichen Kugeldruckplatte 6 befestigte Auslösestößel 10 drückt nun in entspanntem Zustand der Auslöseeinheit auf das zu betätigende Auslöseelement am Flaschenventil mit der erforderlichen Kraft von beispielsweise 100 – 150 N (10 – 15 kp).

Beim Spannen der Auslöseeinheit muß nun die obere bewegliche Kugeldruckplatte 6 sowohl axial um den Hub x als auch radial um den Winkel 60° bewegt werden. Die Schraubenfeder 2 ist gegen Verdrehung durch je eine Andrehung am Führungsflansch 5 und an der Kugeldruckplatte 6 fixiert. Beim Spannen wird nun eine solche axiale Verdrehung der Kugeldruckplatte 6 vorgenommen, daß dadurch die Schraubenfeder 2 außer einer axialen Spannung auch eine Torsionsspannung entsprechend einer Verdrehung von 60° erhält. Diese Verdrehung ist so ausgelegt, daß die Schraubenfeder 2 dadurch eine Verringerung ihres Durchmessers erfährt. Dies wiederum führt zu einer zusätzlichen Verklemmung der beiden Federenden auf der Andrehung des Führungsflansches 5 und auf der Andrehung der Kugeldruckplatte 6.

Demnach muß in gespanntem Zustand der Auslöseeinheit die obere Kugeldruckplatte 6 sowohl axial als auch radial gehalten werden. Die axiale Halterung übernehmen, wie bereits beschrieben, die Stahlkugeln 7, während die radiale Halterung durch den Schwerspannstift 11 übernommen wird. Dieser Schwerspannstift 11 wird in gespanntem Zustand durch eine Klinke 12 gehalten, welche sich um die Achse 13 drehen kann. Die Klinke 12 weist eine Einkerbung 12a auf, in die der Schwerspannstift 11 einrastet. Eine zweite fest an der Klinke 12 befestigte Klinkenachse 14 ist mit einem gewissen Spiel mit dem Magnetstößel 15 verbunden. Dieses Spiel hebt die Differenz zwischen der linearen Bewegung des Magnetstößels 15 und der Kreisbewegung der Klinkenachse 14 auf. Eine Hilfsfeder 4a hält den Magnetstößel 15 und damit die Klinke 12 in Ausgangsposition.

Unterhalb der Klinke 12 können Mikroschalter 16 angebracht werden, welche betätigt werden, sobald die Klinke 12 durch den Magnetstößel 15 bewegt wird. Nach Anlegen einer Spannung an den Elektromagneten 4 zieht der Magnetstößel 15 die Klinkenachse 14 hoch und die Klinke 12 bewegt sich nach unten, wodurch der Schwerspannstift 11 aus der Einkerbung 12a freigegeben wird, und die obere Kugeldruckplatte 6 dreht sich unter der Einwirkung der Torsionsspannung der Schraubenfeder 2 in ihre Endlage. Die Stahlkugeln 7 rollen über die Flächen der beiden Kugeldruckplatten ab und sobald die Vertiefungen 6a und 9a der Kugeldruckplatten 6 und 9 gegenüber liegen, rasten die Stahlkugeln 7 in diese Vertiefungen 6a und 9a ein, wobei sich die Distanz zwischen den beiden Kugeldruckplatten vom Ausgangswert a auf den Endwert b verringert.

Außer dieser elektrischen Auslösung ist eine völlig unabhängig davon arbeitende Handauslösung vorgesehen. Sie besteht aus einem pilzförmigen Handauslöseknopf 17, der im Führungsflansch 5 axial beweglich ist. Zwischen dem Handauslöseknopf 17 und der oberen Kugeldruckplatte 6 befindet sich konzentrisch zur Schraubenfeder 2 eine Hilfsfeder 18. Ein Seegerring 19 bildet den oberen Anschlag für den Handauslöseknopf 17 am Führungsflansch 5. In diesem Handauslöseknopf 17 ist ein Auslösestift 20 eingepreßt, welcher mit einem gewissen Spiel durch entsprechende Bohrungen in der beweglichen Kugeldruckplatte 6 und dem Auslösestößel 10 hindurchführt und in gleicher Höhe endet wie die Unterseite des Auslösestößels 10. Durch Herabdrücken des Handauslöseknopfes 17 wird dieser Auslösestift 20 direkt auf das zu betätigende Auslöseelement am Ventil gedrückt, so daß dieses manuell völlig unabhängig von der elektromagnetischen Auslösung geöffnet werden kann. Zwischen dem Pilzkopf des Handauslöseknopfes 17 und dem Führungsflansch 5 ist ein Sicherungselement 21 eingesetzt, welches die gleiche Dicke aufweist wie der erforderliche Auslösehub x. Die Handauslösung der Einrichtung kann daher nur erfolgen, wenn vorher das Sicherungselement 21 entfernt worden ist.

Bei der Montage der Auslösevorrichtung z. B. auf der pneumatischen Ansteuereinheit oder direkt auf dem Ventil sorgt ein Sicherungselement dafür, daß der Zusammenbau im entspannten Zustand der Auslöseeinrichtung nicht möglich ist und somit vermieden wird, daß beim Zusammenbau von Auslöseeinheit und Ansteuereinheit bzw. von Auslöseeinheit und Ventil das Ventil betätigt wird. Diese Sicherungseinrichtung besteht darin, daß das Gehäuse 1 eine Einrichtung aufweist, die im Zusammenwirken mit einer entsprechenden Einrichtung am Ventil, bzw. an der Ansteuereinheit, bewirkt, daß der Zusammenbau nur in einer einzigen Position erfolgen kann. Diese Einrichtung kann z. B. darin bestehen, daß das Gehäuse 1 eine Aussparung aufweist und das Ventil, bzw. die Ansteuereinheit einen Vorsprung aufweist, der in die Aussparung des Gehäuses 1 eingreift. Ferner weist der Auslösestößel 10 am unteren, kreisrunden Querschnitt zwei angefräste Flächen 10a auf, wie in 5 dargestellt ist. Der Flansch des Ventils, bzw. die Ansteuereinheit weist eine entsprechende Nut auf. Die Stellung der angefrästen Flächen 10a ist im gespannten Zustand der Auslösevorrichtung gegenüber dem ausgelösten Zustand nur 60° verdreht, wobei die Flächen 10a nur im gespannten Zustand der Auslösevorrichtung parallel zu den Seitenflächen des Schlitzes in der Ansteuereinheit bzw. dem Ventilbefestigungsflansch sind. Dadurch wird erreicht, daß die Auslöseeinheit nur in gespanntem Zustand montiert werden kann, d. h. wenn sich der Auslösestößel in der oberen Position befindet. Es wird dadurch ein ungewolltes Auslösen des Ventils bei der Montage verhindert.

Zur Überprüfung der Auslöseeinrichtung kann diese mit einfachen Mitteln von der Ansteuereinheit bzw. vom Ventil gelöst werden. Nach Anlegen einer Spannung bzw. nach dem Aktivieren der Brandmeldeanlage an die die Löschanlage angeschlossen ist, kann nun das Funktionieren der Auslöseeinrichtung überprüft werden, ohne daß die Gefahr besteht, daß das Flaschenventil angesteuert und damit geöffnet wird. Das Spannen der Auslöseeinrichtung erfolgt dabei mit einem Spezialwerkzeug, welches auf den beiden angefrästen Flächen 10a des Stößels 10 einrastet. Mit diesem Werkzeug wird der Auslösestößel 10 und damit die obere Kugeldruckplatte 6 in ihre Ausgangslage zurückgedreht. Die Stahlkugeln 7 rollen dabei über die Flächen der Vertiefungen 6a und 9a auf den ebenen Flächen der Kugeldruckplatten 6 und 9 ab und spannen dadurch die Schraubenfeder 2 bis zur Ausgangslage. Bei der Drehung der Kugeldruckplatte 6 rastet der mitschwenkende Schwerspannstift 11 in die Einkerbung 12a der Klinke 12 ein, die ihrerseits durch die Hilfsfeder 4a des Magneten 4 gegen den Schwerspannstift 11 gedrückt wird.

Zur Überwachung des Betriebszustandes der Einrichtung können mehrere Überwachungsschalter vorgesehen sein. Zunächst ist unter der Klinke 12 ein Mikroschalter 16 vorgesehen, welcher schaltet, wenn die Klinke 12 in die untere Position geschwenkt ist. Dies ist der Fall, wenn der Magnet 4 angezogen hat und die Kugeldruckplatte 6 verdreht und in der unteren Position eingerastet ist, d. h. wenn sich die Auslösevorrichtung im entspannten Zustand befindet. Der Mikroschalter 16 unter der Klinke 12 hat mehrere Funktionen. Er dient einerseits der Rückmeldung an die Signalzentrale, daß das Ventil angesteuert ist, andererseits dazu, den Magnetstrom nach erfolgter Ansteuerung zu unterbrechen.

Neben dem Handauslöseknopf 17 kann ein weiterer Mikroschalter 24 vorgesehen sein, der durch eine schräge Andrehung am Schaft des Handauslöseknopfes 17 und einen auf diese Fläche aufsitzenden Stift 22, der beweglich im Führungsflansch horizontal liegend angeordnet ist, betätigt wird. Die Bewegung dieses Stiftes 22 wird dabei auf die Schaltfahne des Mikroschalters 24 übertragen.

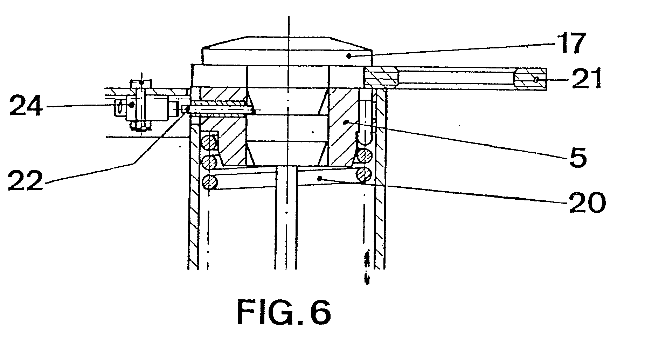

Fig. 6 zeigt einen Längsschnitt durch den oberen Teil einer Auslösevorrichtung. Bei dieser bevorzugten Ausführungsform ist der Handauslöseknopf 17 durch einen Stift 22 gegen Herausziehen gesichert. Der Stift 22 ist horizontal beweglich im Führungsflansch 5 angeordnet und dient gleichzeitig zur Betätigung des Mikroschalters 24, wobei der Stift 22 an einen konisch geformten Teil des Handauslöseknopfes 17 so anliegt, daß durch eine untere, parallel zur Achse des Stiftes 22 angeordnete ringförmige Fläche, an die der Stift im Ruhezustand anliegt, das Herausziehen des Betätigungsknopfes 17 verhindert wird und daß bei Betätigung des Handauslöseknopfes 17 die konische Fläche den Stift 22 unter Betätigung des Mikroschalters 24 nach außen schiebt. Bei dieser Ausführungsform sind Seegerring 19 und Hilfsfeder 18 überflüssig.

Eine zusätzliche mechanisch-optische Betriebszustandsanzeige der Auslösevorrichtung kann dadurch erreicht werden, daß der Schwerspannstift 11 im entspannten Zustand der Einrichtung durch einen Schlitz 23 in der Wand des Gehäuses 3 sichtbar ist.

Die erfindungsgemäße Auslösevorrichtung weist den großen Vorteil auf, daß zur Auslösung nur die Kraft benötigt wird, die erforderlich ist, um die Klinke 12 so weit zu drehen, daß der Spannstift 11 aus der Ruhelage gleiten kann, d. h. es muß nur der geringe, durch die Torsionsspannung der Schraubenfeder 2 in der Einkerbung 12a der Klinke 12 hervorgerufene Reibungswiderstand überwunden werden.

Der Betriebszustand des durch die erfindungsgemäße Auslösevorrichtung angesteuerten Ventils ist jederzeit zu erkennen. Die Fernauslösung wird durch den Mikroschalter 16 — und zusätzlich durch den Mikroschalter 24 — der Signalzentrale gemeldet. Die Handauslösung wird durch den Mikroschalter 24 der Zentrale gemeldet. Dabei ist bei getrennter Führung der Signale von den Mikroschaltern 16 und 24 erkennbar, ob automatische Fernauslösung oder Handauslösung erfolgte. Die Handauslösung ist außerdem an Ort und Stelle aus der Stellung des Handauslöseknopfes 17 zu erkennen.

**Patentansprüche**

1. Auslösevorrichtung für ein Ventil einer Brandlöschanlage mit einem linear beweglichen Element (10), das bei Entriegelung einer vorgespannten Feder (2) aus seiner Ruhelage bewegt wird und das Ventil betätigt, sowie mit zwei Kugeldruckplatten (6, 9) und zwischen den Kugeldruckplatten angeordneten Kugeln (7), die die Kugeldruckplatten auf Distanz und die Feder gespannt halten und bei Verdrehung der Kugeldruckplatten gegeneinander in Vertiefungen (6a, 9a) der Kugeldruckplatten einrasten und damit die Feder mindestens teilweise zu entspannen vermögen, dadurch gekennzeichnet, daß die als Schraubenfeder (2) ausgebildete Feder im gespannten Zustand sowohl auf axialen Druck als auch auf Torsion belastet ist, und daß die bewegliche Kugeldruckplatte (6) mit einem Spannstift (11) verbunden ist, der bei Verdrehung der Kugeldruckplatte (6) zur Spannung der Schraubenfeder (2) in eine elektromagnetisch auslösbare Auslöseklinke (12) einrastet.

2. Auslösevorrichtung gemäß Anspruch 1, dadurch gekennzeichnet, daß die Schraubenfeder (2) durch Verringerung ihres Innendurchmessers als Folge der Torsionsbelastung mit ihren Enden auf die Andrehung eines mit dem Gehäuse (1) verbundenen Führungsflansches (5) und auf ein Teil der beweglichen Kugeldruckplatte (6) geklemmt ist.

3. Auslösevorrichtung nach Anspruch 1, dadurch gekennzeichnet, daß konzentrisch zu der Schraubenfeder (2) eine Hilfsfeder (18) vorgesehen ist, welche mit einem Handauslöseknopf (17) verbunden ist, der ein unabhängig vom erstgenannten, linear beweglichen Element (10) ein weiteres, linear bewegliches Element (20) zur unabhängigen manuellen Auslösung des Ventils trägt.

4. Auslösevorrichtung nach Anspruch 3, dadurch gekennzeichnet, daß der Handauslöseknopf (17) durch ein Sicherungselement (21) blockierbar ist.

5. Auslösevorrichtung nach Anspruch 1, dadurch gekennzeichnet, daß der Betriebszustand der Einrichtung durch mindestens einen Mikroschalter (16, 24) überwachbar ist.

6. Auslösevorrichtung nach Anspruch 1, dadurch gekennzeichnet, daß der Betriebszustand der Einrichtung visuell durch das Sichtbarwerden des Spannstiftes (11) in einem Schlitz (23) des Hilfsgehäuses (3) ermittelbar ist.

7. Auslösevorrichtung gemäß Anspruch 3, dadurch gekennzeichnet, daß der Handauslöseknopf (17) durch einen Stift (22) gesichert ist, der radial beweglich im Führungsflansch (5) horizontal angeordnet ist und gleichzeitig zur Betätigung des Mikroschalters (24) dient, wobei der Stift (22) an einen konisch geformten Teil des Handauslöseknopfes (17) so anliegt, daß durch eine untere, parallel zur Achse des Stiftes (22) angeordnete ringförmige Fläche, an die der Stift im Ruhezustand anliegt, das Herausziehen des Betätigungsknopfes (17) verhindert wird, und daß bei Betätigung des Handauslöseknopfes (17) die konische Fläche den Stift (22) unter Betätigung des Mikroschalters (24) nach außen schiebt.

**Claims**

1. A release mechanism for a valve of a fire extinguishing installation having a linearly movable element (10) which, upon release of a pre-biased spring (2), moves out of a rest position and actuates the valve, and having two ball pressure plates (6, 9), and a plurality of balls (7) arranged between said ball pressure plates (6, 9) for maintaining said ball pressure plates (6, 9) in spaced relationship from one another and for biasing said spring (2), said ball pressure plates (6, 9) being rotatable relative to one another so that said balls (7) latch into recesses (6a, 9a) of the ball pressure plates (6, 9) and enable the spring (2) to at least partially relax, characterized in that said spring (2) comprises a helical spring which in its biased state is loaded both in axial compression and in torsion, and that one of said ball pressure plates (6, 9) is a movable ball pressure plates (6) being connected with a loading pin (11) which upon rotation of said movable ball pressure plate (6), latch at an electromagnetically actuatable release catch means (12) in order to load said helical spring (2).

2. The release mechanism as defined in claim 1, characterized in that one of the opposed ends of said helical spring (2) due to the loading stress of said helical spring reducing its internal diameter, is clamped at a guide flange (5) being connected with the housing means of said release mechanism and the other opposed end of said helical spring is clamped at a part of said movable ball pressure plate (6).

3. The release mechanism as defined in claim 1, characterized in that there is provided for an auxiliary spring (18) arranged essentially concentrically with respect to said helical spring (2), and a manually operated-release knob (17), bearing a further linearly movable element (20) operating independently of said first linear movable element (10) for the independent manual release of the valve.

4. The release mechanism as defined in claim 3, characterized in that said manually operated-release knob (17) is blockable by a securing means (21).

5. The release mechanism as defined in claim 1, characterized in that the operating state of the release mechanism can be monitored by at least one microswitch (16, 24).

6. The release mechanism as defined in claim 1, characterized in that there is provided for an auxiliary housing means (3) including slot means (23) and that the operating state of said release mechanism is visually determinable by observing said loading pin (11) through said slot means (23).

7. The release mechanism as defined in claim 3 characterized in that said manually operated-release knob (17) is secured by a pin means (22), said pin means (22) being arranged essentially horizontally for radial movement at said guide flange and simultaneously serving for actuating the microswitch (24), further characterized in that said manually operated-release knob (17) has an essentially conically formed part against which bears said pin means (22) such that by means of a lower substantially ring-shaped surface arranged essentially parallel to the lengthwise axis of said pin means (22) and against which bears said pin means (22) in a rest position thereof there is prevented pulling out of said manually operated-release knob (17) and still further characterized in that upon actuation of said manually operated-release knob (17) said conical surface outwardly displaces said pin means (22) while actuating said microswitch (24).

## Revendications

1. Dispositif de déclenchement pour une vanne d'une installation d'extinction d'incendies, comprenant un élément (10) mobile linéairement qui, lors du déverrouillage d'un ressort (2) mis préalablement sous tension, est déplacé hors de sa position de repos et actionne la vanne, ainsi que deux plateaux (6, 9) de pression à billes et, interposées entre eux, des billes (7) qui maintiennent les plateaux à distance et le ressort sous tension, et lors de la rotation des plateaux l'un par rapport à l'autre, s'engagent dans des évidements (6a, 9a) ménagés dans les plateaux et permettent ainsi de détendre, au moins partiellement, le ressort, caractérisé en ce que le ressort, qui est un ressort à boudin (2), est, à l'état sous tension, sollicité tant en compression qu'en torsion, et le plateau (6) de pression mobile est solidaire d'une broche (11) de traction qui, lors de la rotation du plateau (6) pour mettre le ressort à boudin (2) sous tension, s'engage dans une lame (12) pouvant être déclenchée électromagnétiquement.

2. Dispositif de déclenchement suivant la revendication 1, caractérisé en ce que les extrémités du ressort à boudin (2) sont bloquées, par diminution du diamètre intérieur de celui-ci en raison de la contrainte de torsion, sur la collerette d'une bride (5) de guidage reliée au boîtier (1) et sur une partie du plateau (6) de pression mobile.

3. Dispositif de déclenchement suivant la revendication 1, caractérisé en ce qu'il est prévu, concentriquement au ressort à boudin (2), un ressort (18) auxiliaire qui est relié à un bouton (17) de déclenchement manuel, lequel porte indépendamment de l'élément (10) nommé en premier mobile linéairement un autre élément (20) mobile linéairement destiné au déclenchement manuel indépendant de la vanne.

4. Dispositif de déclenchement suivant la revendication 3, caractérisé en ce que le bouton (17) de déclenchement à la main peut être bloqué par un élément (21) de sécurité.

5. Dispositif de déclenchement suivant la revendication 1, caractérisé en ce que l'on peut surveiller l'état de fonctionnement du dispositif par au moins un microinterrupteur (16, 24).

6. Dispositif de déclenchement suivant la revendication 1, caractérisé en ce que l'on peut déterminer visuellement l'état de fonctionnement du dispositif par le fait que la broche (11) de traction est visible par une fente (23) du boîtier (3) auxiliaire.

7. Dispositif de déclenchement suivant la revendication 3, caractérisé en ce que le bouton (17) de déclenchement à la main est maintenu par une tige (22) horizontale pouvant se déplacer radialement dans la bride (5) de guidage et servant en même temps à actionner le microinterrupteur (24), la tige (22) venant en contact avec une partie en forme de cône du bouton (17) de déclenchement à la main de manière à empêcher, par une face annulaire inférieure parallèle à l'axe de la tige (22) et qui à l'état de repos est en contact avec la tige, le retrait du bouton (17) d'actionnement et, lors de l'actionnement de ce bouton (17) de déclenchement, la surface conique de la tige (22) s'écarte vers l'extérieur sous l'action du microinterrupteur (24).

0 004 588

FIG. 5

FIG. 1

FIG. 2

FIG. 3

FIG. 4a

FIG. 4b

7

FIG.6